# EUROPEAN PATENT SPECIFICATION

(11) **EP 3 053 839 B1**
(45) Date of publication and mention of the grant of the patent: **22.08.2018**
(21) Application number: 13894962.3
(22) Date of filing: 03.10.2013
(51) Int. Cl.: B65B 25/02, B65D 85/34, B65D 81/34, B65D 81/22, B32B 3/10, B32B 7/02, B65D 65/40, B65D 81/26, B65D 81/28, B32B 7/04

(54) **PACKAGING FOR PRESERVING FRUITS AND VEGETABLES, AND MANUFACTURING METHOD**
VERPACKUNG ZUM AUFBEWAHREN VON OBST UND GEMÜSE UND HERSTELLUNGSVERFAHREN
EMBALLAGE POUR LA CONSERVATION DE FRUITS ET DE LÉGUMES, ET PROCÉDÉ DE FABRICATION

(43) Date of publication of application: 10.08.2016
(73) Proprietor: Grijalva Varillas, Sergio Fernando, 45010 - Zapopan, JAL (MX)
(72) Inventor: Grijalva Varillas, Sergio Fernando, 45010 - Zapopan, JAL (MX)
(74) Representative: Keilitz, Wolfgang
(86) International application number: PCT/MX2013/000118
(87) International publication number: WO 2015/050423

(56) References cited:
- WO-A1-98/25835
- WO-A1-2008/093966
- CN-A- 101 919 347
- FR-A1- 2 383 850
- JP-A- 2006 298 450
- US-A- 5 226 735
- US-A- 6 035 611
- US-A1- 2007 054 075
- DATABASE WPI Week 200681 Thomson Scientific, London, GB; AN 2006-793161 XP002768742, & JP 2006 298450 A (FUKUSUKE KOGYO KK) 2 November 2006 (2006-11-02)
- DATABASE WPI Week 200913 Thomson Scientific, London, GB; AN 2009-E71624 XP002768743, & CN 101 348 181 A (LIN Q) 21 January 2009 (2009-01-21)

## Description

### Technical Field

The object of the invention presented herein is a packaging for preserving fruits and vegetables, which is low-cost and made of flexible polymer materials, which allow controlled ventilation, allowing the packaged fruits and/or vegetables to preserve the hydration thereof for a larger number of days, keeping them fresh for a longer time.

### Background

On the market today, as it is known, there are two types of packaging for fruits and vegetables, i.e., rigid and flexible, neither of which controls ventilation. The first type is packaging for fruits and vegetables generally consisting of a rigid plastic body made in a single body. Said body is heat-formed in one piece, having concavities and a hinge which allows folding and closing a lid. This rigid packaging consists of a single plastic material having considerable thickness to assure rigidity.

The second type is packaging for fruits and vegetables generally consisting of a flexible plastic body made in a single body or container in the form of a bag. Said bag generally consists of a single plastic material having variable thickness. Once these packaging bags are filled with fruits and/or vegetables, they cannot be displayed at the point of sale in the upright position or vertically because they do not have a planar support base.

These types of packaging have different problems to be solved; even though they are low-cost, they do not assure hydration control inside same, and therefore the packaged fruits and vegetables suffer a daily loss of moisture. Another drawback is the weight loss of the packaged fruits and vegetables due to the dehydration of same. Said products are sold by weight, and as days go by, their value drops. Additionally, in the case of the rigid plastic packaging, printed adhesive labels are applied for sale. Said labels and their application, increase the cost of the packaging.

WO 98/25835 A1 discloses a packaging for keeping fruits and vegetables hydrated, comprising a laminar body made of polymer material including: a first layer, second layer made of non-woven fabric material placed above the first layer in a central portion thereof; and a third layer made of perforated polymer material, placed above the second layer. Only the third layer is heat sealed to the first layer.

US 5 226 735 A and FR 2 383 850 A1 disclose various other packages having a perforated layer of polymer material.

The invention presented herein proposes solving the aforementioned problems by means of using porous and micro-perforated polymer materials which allow controlled ventilation of gas emissions given off by fruits and vegetables, as well as control of the inner moisture in the packaging.

Furthermore, a manufacturing method for manufacturing polymer reels having three or more layers is proposed by heat-sealing edges of polymer films in the central portion of the main polymer film reel.

### Detailed Description

Description of the proposal: The present proposal consists of a packaging that can be made with contained costs, that assures preservation of the packaged products for a longer time without the need for refrigeration, that furthermore contains printed information and advertising on the same surface of the flexible packaging.

In this context, the main aspect is the manufacture of a flexible packaging in the form of a bag with a planar base which, by means of use thereof, enables solving the loss of water of the packaged fruit and vegetable, using porous and/or micro-perforated polymer materials and manufacturing techniques that would reduce the cost thereof in relation to packaging used today.

A second feature of the packaging proposal is the use of a special heat-sealing manufacturing system by heat-sealing three or more polymer films depending on the degree of hydration of the packaged products to be achieved. Heat-sealing is obtained by means of heat-welding the edges of two or more polymer sheets in the central portion of a third larger-sized polymer sheet. A third aspect for this packaging proposal is the proposal of a packaging made of materials that are 100% recyclable.

A fourth aspect is the proposal of a packaging that reduces the volume of material used as packaging. This will also result in considerable savings in transport costs.

To achieve this, it is necessary to use polymer material in the form of planar strips. Three or more polymer strips are used, the first and widest strip will be used to form the outer surface of the packaging having a structural function. Two successive strips of porous polymer material having an absorbent function and/or micro-perforated strips that have a moisture-retaining function are placed in the central portion of the first polymer strip. These strips or layers of polymer materials are heat-sealed and adhered to assure the stability and permanence thereof in the same site while building and folding the packaging. Said system for welding polymer films at the edges thereof has been especially developed for this packaging. This central heat-sealing method and manufacturing method are unique and are part of the object of the invention herein presented. The central heat-sealing is achieved by means of metal rollers facing one another and between which the polymer films roll for the sealing thereof in the central portion of the plastic strips by applying heat and pressure. Subsequently the strip is cut along the width, leaving a rectangle the center of which contains three strips of polymer materials.

The rectangle is subsequently folded in three sections in its center and the edges thereof are sealed and adhered by means of heat. Once the packaging is shaped in the form of a bag, the side edges are sealed and adhered, assuring a bearing structure in the form of a bag with a rectangular planar base. A second variant for the control of inner moisture is obtained using three or more strips of planar and micro-perforated polymer material, the first strip being the widest and the subsequent two strips being placed in the central portion and having a perforated surface. An additional number of variants can be achieved by integrating absorbent materials such as, and not limited to, cellulose, cotton, hemp, bagasse and other similar materials. The packaging in the form of a bag allows, due to the juxtaposition of different layers of porous and micro-perforated polymer materials, control of moisture inside the packaging and a reduced loss of water. Due to the regulation of the loss of moisture, 10% to 20% of the dehydration and reduced weight of the packaged fresh products are prevented.

### Brief Description of the Drawings

Other features and advantages of the invention will become evident especially from the description of a preferred but not exclusive embodiment of the packaging for long preservation of fruits and vegetables for a longer time, shown in an illustrative and nonlimiting manner in the attached drawings:

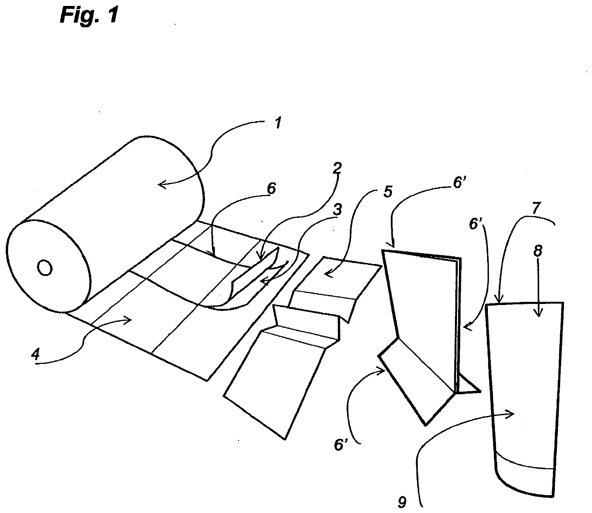

Figure 1 is a perspective view of the manufacturing method for manufacturing the bags, starting with a reel (1) of three or more polymer materials, of which polymer materials two or more materials (2) and (3) are attached to one another by means of a heat-sealing method in the center (6) thereof, and subsequently the reel is cut into rectangular sections (4) for subsequently being folded in six sections (5). The bag is subsequently heat-sealed at the edges (6') thereof, resulting in a bag having a planar base closed on three sides. The open upper portion (7) of said bag is used to allow filling the bag with fresh products, such as fruit and/or vegetable, to subsequently close it, also by means of heat-sealing (8).
   Reference number (9) is a view of the presentation of the finished packaging ready to be filled with fruits or vegetables;

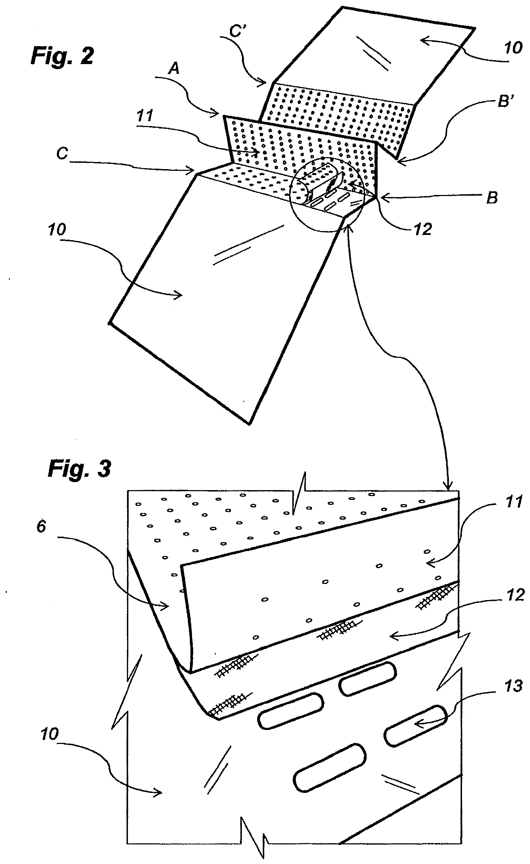

Figure 2 is a perspective view of the different layers of polymer films forming the body of the packaging and of how they are attached to one another to form a single strip of material. Said view shows a transparent polymer material (10) perforated in the comprised areas located between folds (C) and (C') with a strip of polymer materials placed in the center, a micro-perforated polymer material (11), and a third porous material formed from a plastic non-woven fabric material shown in the constructive detail.
Figure 3 shows a perspective view of a detail of how the different layers of micro-perforated polymer materials (11), non-woven fabrics (12) and transparent materials (10), having variable perforations (13) along the length and width of the area comprised between folds (C) and (C') to regulate ventilation, are attached to one another. The center of the layers of polymer material (11) and (12) are attached only at the edges thereof with the layer of transparent material (10).

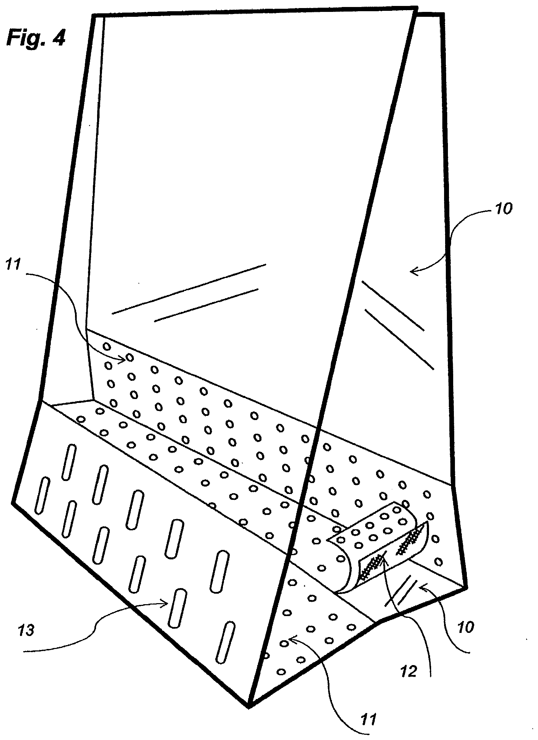

Figure 4 shows a perspective section view of the different layers of polymer films forming the body of the packaging and of how they are attached to one another to form a single strip of material. Said view shows a transparent polymer material (10) with a strip of polymer materials placed in the center, a micro-perforated material (11), and a third plastic non-woven fabric material (12) which allows controlled ventilation, as well as perforations (13) having a variable size that help regulate ventilation.

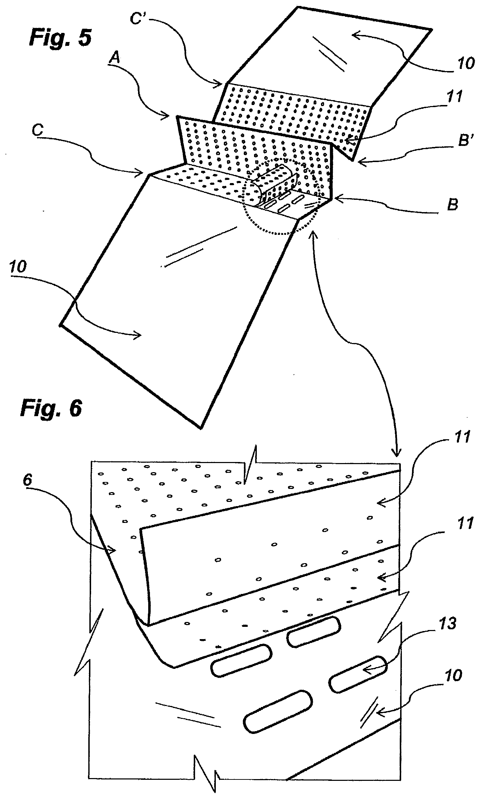

Figure 5 shows a perspective view showing a variant of the different layers of polymer films forming the body of the packaging and of how they are attached to one another to form a single strip of material. Said view shows a transparent polymer material (10), with a strip of plastic materials placed in the center, a micro-perforated polymer material (11), and a third micro-perforated material (11) shown in the constructive detail.
Figure 6 shows a perspective view of a detail of how the different layers of micro-perforated polymer materials (11) and transparent polymer materials (10), having variable perforations (13) to regulate ventilation, are attached to one another.

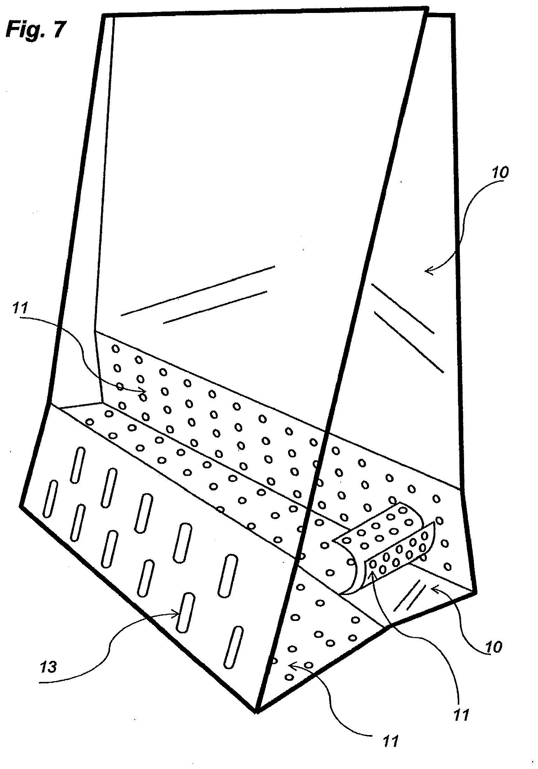

Figure 7 shows a perspective section view of the different layers of polymer films forming the body of the packaging and of how they are attached to one another to form a single strip of material. Said view shows a transparent plastic material (10) with a strip of polymer materials placed in the center, a micro-perforated material (11), and a third micro-perforated plastic material (11), as well as perforations (13) having a variable dimension that help regulate ventilation.

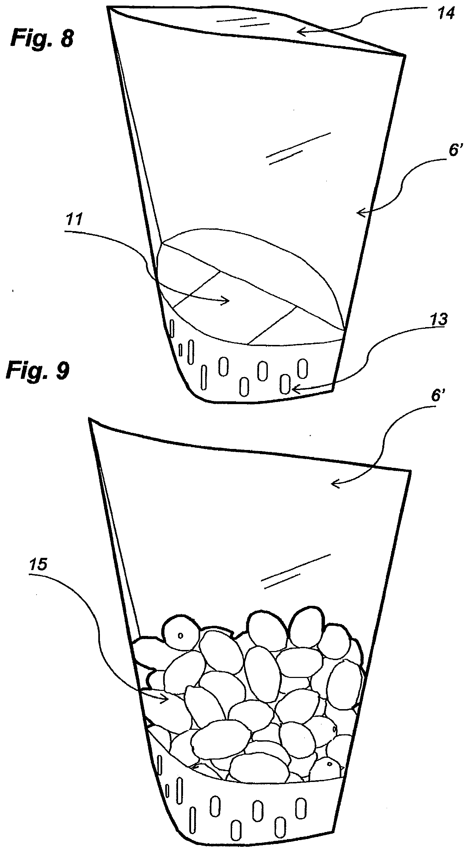

Figure 8 shows a perspective view of the bag folded and sealed at the sides (6') thereof, as well as being open in the upper portion (14) thereof to be filled with fruits or vegetables. The lower portion of the bag shows perforations (13) and layers of micro-perforated materials (11) to regulate ventilation.
Figure 9 shows a perspective view of the bag, sealed in the upper portion (6') thereof after having been filled with fruits, vegetable or any fresh food (15).

In relation to the mentioned figures, the packaging for long preservation according to the drawings, globally indicated with reference numbers Figure 4 and Figure 7, includes a body made of a polymer material (10) obtained by blowing, preferably of PE (polyethylene) or the like, substantially having a planar film form with perforations (13) obtained by calendaring in the manufacturing phase thereof. Additionally, the packaging in the form of a bag having a planar base has at the base a layer of synthetic non-woven fabric material (12), preferably made of PP (polypropylene), as well as a layer of polymer material (11), preferably BOPP (bi-oriented polypropylene) or the like, in addition to being micro-perforated, adhered to the layer of polymer material by means of using heat-sealing.

In order for the packaging bag having a planar base to keep its shape, its edges are folded, Figure 4, Figure 7 and Figure 8, subsequently heat-sealed (6') using pressure to assure that the bag can efficiently contain products.

As an alternative to the use of three plastic films; (10), (11), and (12), the material (12), can be replaced with material (11), Figure 6, consisting of BOPP (bi-oriented polypropylene) and being micro-perforated.

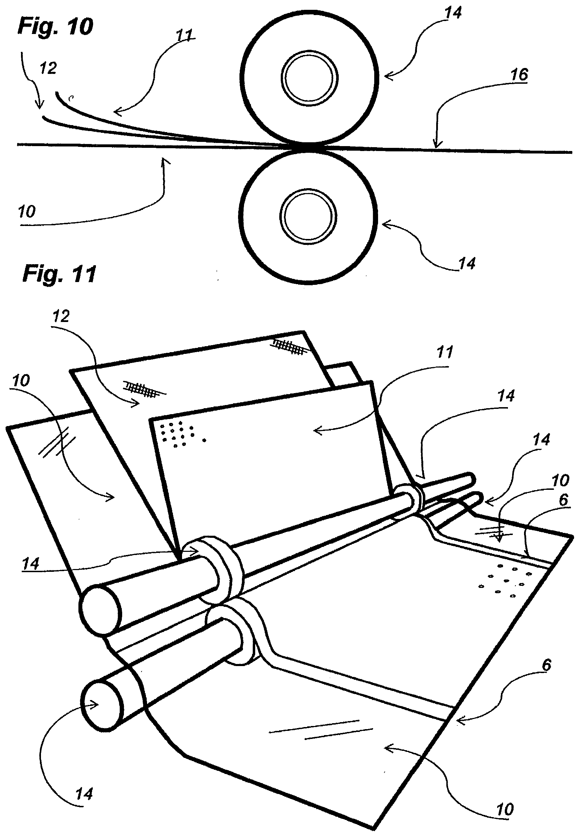

The process of laminating polymer films and the sealing thereof are part of the invention presented herein. Figure 10 and Figure 11 show a perspective section view and of the heat-sealing method by means of the different layers of plastic material (10), (11) and (12) passing through metal rollers (14) in a circular motion which, by means of pressure and a temperature of 150°C or the like, heat-seal (6) the central plastic sheets (10), (11) and (12), obtaining a single laminate (16) in the appropriate area of which will subsequently be the bag for fruits and vegetables.

The packaging for long preservation of fruits and vegetables thus designed is susceptible to a number of modifications and variants, all of which are included in the scope of the invention; furthermore, all the details can be replaced with technically equivalent elements.

In practice, the materials used due to their low cost, preferably either PE (polyethylene) (10), non-woven PP (polypropylene) fabric (12) and micro-perforated BOPP (bi-oriented polypropylene) (11) can be any materials according to the requirements and the state of the art. An additional number of variants of the material (12) can be achieved by integrating absorbent materials, such as and not limited to cellulose, cotton, hemp, bagasse and similar materials. Furthermore, and for the purpose of regulating to a greater extent the loss of hydration of the fruits and vegetables, the number of layers of materials (11) and/or (12) can be increased.

## Claims

1. A bag for keeping fruits and vegetables hydrated, comprising:
a laminar body made of polymer material including:
a first layer of material having structural functions, the first layer being of rectangular shape and being folded along a width direction thereof in six sections along two respective external fold lines (C, C'), two respective intermediate fold lines (B, B') and a central fold line (A), the external fold lines (C, C') defining a central portion and two edge portions of the first layer, the central portion being provided with perforations (13) in the areas between respective intermediate fold lines (B, B') and the external fold lines (C, C') as well as in an area between the intermediate fold lines (B, B') which forms a planar base of the bag
a second layer made of non-woven fabric material (12) or a micro-perforated polymer material (11), the second layer being placed above the first layer in the central portion between the external fold lines (C, C'); and
a third layer made of micro-perforated polymer material (11), placed above the second layer and located between the external fold lines (C, C'),
wherein the second and third layers are heat-sealed to the first layer only at edges (6') thereof in the external fold lines (C, C').

2. The packaging for keeping fruits and vegetables hydrated according to claim 1, **characterized in that** it comprises more than three layers made of polymer material in the central portion thereof which are heat-sealed together only at edges (6') thereof in the external fold lines (C, C').

3. The packaging for keeping fruits and vegetables hydrated according to claim 1, **characterized in that** the second layer is made of a material having a moisture-retaining function, such as cellulose, cotton, bagasse, natural fibers, plant fibers or the like.

4. A method for manufacturing a bag according to one of the preceding claims for keeping fruits and vegetables hydrated, the method comprising the following steps:
a) providing a first layer having perforations (13) in a central portion thereof,
b) placing a second layer made of non-woven fabric material (12) or a micro-perforated polymer material (11) above the first layer in the central portion thereof;
c) placing a third layer made of micro-perforated polymer material (11) above the second layer in the central portion;
d) heat-sealing the different layers at side edges thereof, leaving the different layers of polymer materials attached to one another but not laminated
e) folding the heat-sealed layers along a width direction thereof in six sections along two respective external fold lines (C, C'), two respective intermediate fold lines (B, B') and a central fold line (A), the external fold lines (C, C') defining the central portion and two edge portions of the first layer; and
f) heat-sealing of outer edges (6') so as to form the packaging.

## Patentansprüche

1. Tüte zum Hydrierthalten von Früchten und Gemüse, umfassend einen laminaren Körper aus einem Polymermaterial mit:
einer ersten Schicht eines Materials mit strukturellen Eigenschaften, wobei die erste Schicht eine rechteckige Form aufweist und in Richtung ihrer Breite in sechs Abschnitte gefaltet ist, nämlich entlang zweier entsprechender äußerer Falzlinien (C, C'), zweier entsprechender mittlerer Falzlinien (B, B') und einer zentralen Falzlinie (A), wobei die äußeren Falzlinien (C, C') einen zentralen Bereich und zwei Randbereiche der ersten Schicht definieren, wobei der zentrale Bereich in den Bereichen zwischen den entsprechenden mittleren Falzlinien (B, B') und den äußeren Falzlinien (C, C') als auch in einem Bereich zwischen den mittleren Falzlinien (B, B'), die einen ebenen Boden der Tüte bildet, mit einer Perforation (13) versehen ist,
einer zweiten Schicht aus einem nicht-gewebten Stoff (12) oder einem mikroperforierten Polymermaterial (11), wobei die zweite Schicht in dem zentralen Bereich zwischen den äußeren Falzlinien (C, C') auf der ersten Schicht angeordnet ist; und
einer dritten Schicht aus einem mikroperforierten Polymermaterial (11), die zwischen den äußeren Falzlinien (C, C') auf der zweiten Schicht angeordnet ist;
wobei die zweite und die dritte Schicht nur an ihren Kanten (6') an den äußeren Falzlinien (C, C') mit der ersten Schicht verschweißt sind.

2. Tüte zum Hydrierthalten von Früchten und Gemüse nach Anspruch 1, **dadurch gekennzeichnet, dass** sie in ihrem zentralen Bereich mehr als drei Schichten aus Polymermaterial umfasst, die nur an ihren Kanten (6') an den äußeren Falzlinien (C, C') miteinander verschweißt sind.

3. Tüte zum Hydrierthalten von Früchten und Gemüse nach Anspruch 1, **dadurch gekennzeichnet, dass** die zweite Schicht aus einem Material mit einer feuchtigkeits-rückhaltenden Eigenschaft, wie z. B. Cellulose, Baumwolle, Bagasse, natürliche Fasern, Pflanzenfasern oder dergleichen hergestellt ist.

4. Verfahren zum Herstellen einer Tüte zum Hydrierthalten von Früchten und Gemüse nach einem der vorhergehenden Ansprüche, wobei das Verfahren folgende Schritte umfasst:
a) Herstellen einer ersten Schicht, die in einem zentralen Bereich eine Perforation aufweist;
b) Anordnen einer zweiten Schicht aus einem nicht-gewebten Stoff (12) oder einem mikroperforierten Polymermaterial (11) auf der ersten Schicht in deren zentralen Bereich;
c) Anordnen einer dritten Schicht aus einem mikroperforierten Polymermaterial (11) auf der zweiten Schicht in dem zentralen Bereich;
d) Verschweißen der einzelnen Schichten an ihren seitlichen Kanten, wodurch die einzelnen Schichten aus Polymermaterial miteinander verbunden aber nicht laminiert werden;
e) Falten der verschweißten Schichten in Richtung ihrer Breite in sechs Abschnitte, nämlich entlang zweier entsprechender äußerer Falzlinien (C, C'), zweier entsprechender mittlerer Falzlinien (B, B') und einer mittleren Falzlinie (A), wobei die äußeren Falzlinien (C, C') den zentralen Bereich und zwei Randbereiche der ersten Schicht definieren; und
f) Verschweißen der äußeren Kanten (6'), um die Tüte herzustellen.

## Revendications

1. Sac destiné à garder des fruits et légumes hydratés, comprenant :
un corps stratifié constitué de matière polymère comprenant:
une première couche de matière présentant des fonctions structurelles, la première couche étant de forme rectangulaire et étant pliée dans le sens de la largeur de celle-ci dans six sections le long de deux lignes de pli extérieures respectives (C, C'), deux lignes de pli intermédiaires respectives (B, B') et une ligne de pli centrale (A), les lignes de pli extérieures (C, C') définissant une partie centrale et deux parties de bord de la première couche, la partie centrale étant dotée de perforations (13) dans les zones situées entre des lignes de pli intermédiaires respectives (B, B') et les lignes de pli extérieures (C, C') ainsi que dans une zone située entre les lignes de pli intermédiaires (B, B') qui forme une base plane du sac
une deuxième couche constituée de matière de textile non tissé (12) ou une matière polymère microperforée (11), la deuxième couche étant placée au-dessus de la première couche dans la partie centrale située entre les lignes de pli extérieures (C, C'); et
une troisième couche constituée de matière polymère microperforée (11), placée au-dessus de la deuxième couche et située entre les lignes de pli extérieures (C, C'),
les deuxième et troisième couches étant thermoscellées à la première couche seulement sur les bords (6') de celle-ci dans les lignes de pli extérieures (C, C').

2. Emballage destiné à garder des fruits et légumes hydratés selon la revendication 1, **caractérisé en ce qu'**il comprend plus de trois couches constituées de matière polymère dans la partie centrale de celles-ci qui sont thermoscellées ensemble seulement au niveau de bords (6') de celles-ci dans les lignes de pli extérieures (C, C').

3. Emballage destiné à garder des fruits et légumes hydratés selon la revendication 1, **caractérisé en ce que** la deuxième couche est constituée d'une matière présentant une fonction de rétention d'humidité, telle que la cellulose, le coton, la bagasse, les fibres naturelles, les fibres végétales ou analogue.

4. Procédé de fabrication d'un sac selon l'une des revendications précédentes destiné à garder des fruits et légumes hydratés, le procédé comprenant les étapes suivantes:
a) la production d'une première couche présentant des perforations (13) dans une partie centrale de celle-ci,
b) le placement d'une deuxième couche constituée de matière textile non tissée (12) ou d'une matière polymère microperforée (11) au-dessus de la première couche dans la partie centrale de celle-ci;
c) le placement d'une troisième couche constituée de matière polymère microperforée (11) au-dessus de la deuxième couche dans la partie centrale ;
d) le thermoscellage des différentes couches au niveau de bords latéraux de celles-ci, en laissant les différentes couches de matières polymères attachées les unes aux autres mais non stratifiées
e) le pliage des couches thermoscellées dans le sens de la largeur de celles-ci dans six sections le long de deux lignes de pli extérieures respectives (C, C'), deux lignes de pli intermédiaires respectives (B, B') et une ligne de pliage centrale (A), les lignes de pliage extérieures (C, C') définissant la partie centrale et deux parties de bord de la première couche ; et
f) le thermoscellage de bords extérieurs (6') de manière à former l'emballage.
